(19)

**Europäisches Patentamt**
**European Patent Office**
**Office européen des brevets**

(11) **EP 3 486 266 A1**

(12) **EUROPEAN PATENT APPLICATION**

(43) Date of publication:
**22.05.2019 Bulletin 2019/21**

(51) Int Cl.:
***C08F 255/02*** (2006.01)

(21) Application number: **17202288.1**

(22) Date of filing: **17.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **SABIC Global Technologies B.V.**
**4612 PX Bergen op Zoom (NL)**

(72) Inventors:
• **REMERIE, Klaas**
  **6160 GAA GELEEN (NL)**

• **JASINSKA-WALC, Lidia**
  **6160 GA Geleen (NL)**
• **Duchateau, Robbert**
  **6160 GA Geleen (NL)**
• **Wroblewska, Aleksandra Alicja**
  **6160 GA Geleen (NL)**
• **Bouyahyi, Miloud**
  **6160 GA Geleen (NL)**
• **MOCNY, Piotr**
  **6160 GA Geleen (NL)**

(74) Representative: **Sabic Intellectual Property Group**
**Sabic Intellectual Property Department**
**P.O. Box 3008**
**6160 GA Geleen (NL)**

(54) **PROCESS FOR THE PRODUCTION OF MODIFIED POLYOLEFIN MATERIALS**

(57) The present invention relates to a process for the production of modified polypropylene materials, comprising modifying a polypropylene material using a radical initiator and at least two co-agents comprising at least one co-agent with an unsaturated cyclic structure and a double bond connected in alpha-position on the unsaturated cyclic structure as well as at least one second co-agent with an unsaturation.

EP 3 486 266 A1

**Description**

The present invention relates to a process for the production of modified polypropylene materials, comprising modifying a polypropylene material using a radical initiator and at least two co-agents comprising at least one co-agent with an unsaturated cyclic structure and a double bond connected in alpha-position on the unsaturated cyclic structure as well as at least one second co-agent with an unsaturation.

A process for the modification of polyolefins is thereby already known for example from WO1994025498, whereby a polyolefin and a carrier with an organic peroxide are mixed and heated above the melting point of the polyolefin and the carrier before extrusion.

Such processes however lead to degradation through β-scission in polypropylene.

There is thus a need for a new improved process that allow modification of polypropylene but leads to less degradation.

This objective has now been achieved according to the present invention by a process for the production of modified polypropylene materials, comprising modifying a polypropylene material using a radical initiator and at least one co-agent comprising an unsaturated cyclic structure and a double bond connected in alpha-position on the unsaturated cyclic structure.

In the context of the present invention, polypropylene materials are to be understood to be materials that comprise at least 50 wt.% of polypropylene or polypropylene copolymers, like for example copolymers of propylene and/or ethylene and/or at least one or more other $\alpha$-olefin(s) with 1 to 10 carbon atoms, preferably at least 51 wt.% of polypropylene or polypropylene copolymers, preferably at least 60 wt.% polypropylene or polypropylene copolymers, preferably at least 70 wt.% polypropylene or polypropylene copolymers, preferably at least 80 wt.% polypropylene or polypropylene copolymers, preferably at least 90 wt.% polypropylene or polypropylene copolymers, preferably at least 95 wt.% polypropylene or polypropylene copolymers, preferably at least 99 wt.% polypropylene or polypropylene copolymers.

With polypropylene as used herein is meant propylene homopolymer or a copolymer of propylene with an $\alpha$-olefin, for example an $\alpha$-olefin chosen from the group of $\alpha$-olefin having 2 or 4 to 10 C-atoms, for example ethylene, for example wherein the amount of $\alpha$-olefin is less than 10wt% based on the total propylene copolymer, especially isotactic polypropylene, random polypropylene, impact polypropylene and copolymers of propylene and ethylene comprising more than 50 mol % of propylene.

As comonomers, for example one or more $\alpha$-olefins may be used. The one or more $\alpha$-olefin comonomers may for example be one or more selected from the group of $\alpha$-olefins having 2 or $\geq 4$ and $\leq 10$ carbon atoms. Preferably the one or more $\alpha$-olefin comonomers may comprise for example an acyclic $\alpha$-olefin. For example, the one or more $\alpha$-olefin comonomers may be one or more selected from 1-butene, 1-pentene, 4-methyl-1-pentene, 1-hexene, 1-heptene and/or 1-octene.

In case an $\alpha$-olefin comonomer is used in the polymerization, the one or more $\alpha$-olefin comonomers may for example be present in an amount of $\leq 10.0$ % by weight, alternatively $\leq 8.0$ % by weight, alternatively $\leq 5.0$ % by weight, alternatively $\leq 4.0$ % by weight, alternatively $\leq 3.0$ % by weight, alternatively $\leq 2.0$ % by weight, alternatively $\leq 1.0$ % by weight, alternatively $\leq 0.5$ % by weight, compared to the total weight of the monomers.

In case an $\alpha$-olefin comonomer is used in the polymerization, the one or more $\alpha$-olefin comonomers may for example be present in an amount of $\geq 0.01$ % by weight, alternatively $\geq 0.05$ % by weight, alternatively $\geq 0.10$ % by weight, compared to the total weight of the monomers.

For example, in case an $\alpha$-olefin comonomer is used in the polymerisation, the one or more $\alpha$-olefin comonomers may be present in an amount of for example $\geq 0.01$ % and $\leq 10.0$ % by weight, alternatively $\geq 0.05$ and $\leq 5.0$ % by weight, compared to the total weight of the monomers.

Polypropylene and a copolymer of propylene with an $\alpha$-olefin can be made by any known polymerization technique as well as with any known polymerization catalyst system. Regarding the techniques, reference can be given to slurry, solution or gasphase polymerizations; regarding the catalyst system reference can be given to Ziegler-Natta, metallocene or single-site catalyst systems. All are, in themselves, known in the art.

Preferably, the polypropylene used in the invention, is a propylene co-polymer, preferably a copolymer of propylene and ethylene.

The polypropylene has a melt temperature $(T_m)$ from 140°C to 200°C and/or a crystallization temperature $(T_c)$ from 100°C to 140°C, wherein the $T_m$ and $T_c$ are determined using Differential Scanning Calorimetry according to ASTM D 3418-08 using a scan rate of 10°C/min on a sample of 5mg and using the second heating cycle.

Preferably, the melt mass flow rate of the polypropylene as determined using ASTM D1238-10 (230°C/2.16 kg) ranges from 0.3-100 g/10min. Preferably, the melt mass flow rate of the polypropylene ranges from 0.5 to 25g/10min, more preferably from 0.5 to 10 g/10min.

In the context of the present invention, a radical initiator composition is to be understood to be a composition comprising at least compound that is capable of forming free radicals when subjected to conditions occurring in the extrusion unit. A radical initiator composition according to the present invention may for example be solid, liquid or a solution of at least one radical initiator, especially for example at least one organic or inorganic peroxide, azide or azo compound, in at least one solvent, especially an organic solvent. Examples of solvents that may be used are organic solvents such as non-polar organic solvents including pentane, cyclopentane, hexane, cyclohexane, decane, benzene, toluene and/or polar organic solvents including tetrahydrofuran, ethyl acetate, acetone, dimethylformamide, acetonitrile, propylene carbonate, formic acid, n-butanol, isopropanol, n-propanol, ethanol, methanol, acetic acid and/or mixtures of two or more thereof. The radical initiator composition may thereby for example comprise one or more selected from organic peroxides, azides or azo compounds.

The present invention relates to a process wherein the radical initiator composition may for example comprise at least one organic or inorganic peroxide and/or preferably at least one peroxide selected from:

alkyl peroxides or arylperoxides or alkyl-aryl peroxides, including for example tert-butyl peroxybenzoate, dibenzoyl peroxide, dicumyl peroxide, di(tert-butylperoxyisopropyl)benzene, 2,5-dimethyl-2,5-di(tert-butylperoxy)hexane, tert-butyl cumyl peroxide, 2,5-dimethyl-2,5-di(tert-butylperoxy)hexyne, di-tert-butyl peroxide, 1,1-di(tert-butylperoxy)-3,3,5-trimethylcyclohexane, dilauroyl peroxide and/or mixtures of two or more thereof.

At least one of 1,1-di(tert-butylperoxy)-3,3,5-trimethylcyclohexane or dilauroyl peroxide may thereby be especially preferred.

Suitable organic peroxides may for example include diacyl peroxides, dialkyl peroxides, peroxymonocarbonates, peroxydicarbonates, peroxyketals, peroxyesters, cyclic peroxides, hydroperoxides. Suitable azo compounds may for example include 2,2'-azodi(isobutyronitrile), 2,2'-azodi(2-methylbutyronitrile), 1,1'-azodi(hexahydrobenzonitrile). Suitable azides may for example include organic azides such as 4-acetamidobenzene sulfonyl azide, 1-azidoadamantane, 4-azidoaniline, azidomethyl phenyl sulfide, 2-azido-4-octadecene-1.3-diol, 5-azidopentanoic acid, 3-azido-1-propanamine, 3-azido-1-propanol, 2,6-bis-(4-azidobenziliden)-4-methylcyclohexanone, ethyl azidoacetate, 4-methoxybenzyloxycarbonyl azide.

Examples of suitable diacyl peroxides are diisobutyryl peroxide, di(3,5,5-trimethylhexanoyl) peroxide, dilauroyl peroxide, didecanoyl peroxide, dibenzoyl peroxide.

Examples of suitable dialkyl peroxides are dicumyl peroxide, di(tert-butylperoxyisopropyl)benzene, 2,5-dimethyl-2,5-di(tert-butylperoxy)hexane, tert-butyl cumyl peroxide, 2,5-dimethyl-2,5-di(tert-butylperoxy)hexyne, di-tert-butyl peroxide, di-isononanoyl peroxide, di-tert-amyl peroxide, didecanoyl peroxide.

In an embodiment, the radical initiator composition may for example comprise dilauroyl peroxide.

In an embodiment, the radical initiator composition may for example comprise at least one radical initiator that has a half-life time at 99°C of between 1.0 min and 15.0 min, alternatively between 2.0 min and 10.0 min, alternatively between 4.0 min and 7.0 min.

The half-life time is determined according to the formula I:

$$t_{1/2} = \frac{ln2}{A \cdot e^{-\frac{E_a}{R \cdot T}}}$$

Formula I

In which:

$t_{1/2}$ is the half-life time in s;

A is the Arrhenius frequency factor in $s^{-1}$;

$E_a$ is the activation energy for the dissociation of the initiator in J/mol;

R is the universal gas constant 8.3142 J/mol·K;

T is the temperature in K.

The half-life time presents the time by which at least half of the molecules of the radical initiator have decomposed.

A radical initiator composition may for example be added to the polypropylene material in the solid or to the polypropylene material in the molten state. The radical initiator composition may especially be added to an extrusion unit, like for example an extruder, in a stage where the polyolefin material is molten or in a solid state.

The radical initiator composition may for example be fed in a liquid form or in a solid form, optionally under pressure.

The radical initiator composition may for example comprise between 0.01 w% and 1.5 w% alternatively between 0.05 w% and 1 w%, alternatively between 0.07 w% and 0.9 w%, alternatively between 0.1 w% and 0.8 w%, alternatively between 0.2 w% and 0.7 w%, alternatively between 0.3 w% and 0.6 w% by weight of radical initiator, compared to the amount of polypropylene material.

According to the invention, at least one co-agent with an unsaturated cyclic structure and a double bond connected in alpha-position on the unsaturated cyclic structure may preferably for example be a compound that comprises an unsaturated cyclic structure and a double bond connected in alpha-position on the unsaturated cyclic structure, such as for example at least one compound selected from the group of styrene, divinylbenzene, divinyl-furan, divinyl-pyrole, divinyl n-alkyl pyrole, divinyl-naphthalene and their derivatives or a mixture of two or more of these compounds.

According to the invention, at least one second co-agent with an unsaturation may preferably be compound comprising an unsaturation, such as for example one compound selected from the group of maleic anhydride, styrene, vinyl acetate, 2-hydroxyethyl-maleimide, an acrylate and/or a methacrylate or a mixture of two or more of these compounds.

At least one co-agent with a unsaturation may be added for example in a quantity of between 0.1 wt% and 10 wt%, preferably between 0.5 wt % and 8 wt %, further preferred between 0.7 wt % and 7 wt %, further preferred between 0.9 wt % and 6 wt %, further preferred between 1 wt % and 5.5 wt %, further preferred between 2.5 wt % and 5.4 wt %, further preferred between > 3 wt % and 5.3 wt %, compared to the amount of polypropylene material.

At least one co-agent with an unsaturated cyclic structure and a double bond connected in alpha-position on the unsaturated cyclic structure may be added for example so that the molar ratio between each co-agent with an unsaturated cyclic structure and a double bond connected in alpha-position on the unsaturated cyclic structure and each second co-agent(s) with an unsaturation is between 0.1:1 and 10:1, preferably between 0.2:1 and 7:1, preferably between 0.3:1 and 6:1, further preferred between 0.4:1 and 5.5:1, further preferred between 0.5:1 and 5:1, further preferred between 0.7:1 and 2:1.

Each co-agent may be added as a gas and/or solid and/or as a liquid and/or as a solution, optionally under pressure.

According to the invention, at least two co-agents with an unsaturated cyclic structure and a double bond connected in alpha-position on the unsaturated cyclic structure can be used in a preferred embodiment.

According to the invention, at least two co-agents with an unsaturation can be used in a preferred embodiment.

According to the invention, at least two co-agents with an unsaturated cyclic structure and a double bond connected in alpha-position on the unsaturated cyclic structure as well as one or more co-agents with an unsaturation can be used in a preferred embodiment.

Each co-agent may be added to an extrusion unit, like an extruder, in a stage where the polypropylene material is molten or in a solid state.

Each co-agent may be added to an extrusion unit together with the polypropylene material preferably for example in the lowest temperature zone (the zone with the lowest temperature setting) of an extrusion unit.

Each co-agent and/or a radical initiator composition may be added to an extrusion unit, like an extruder, preferably in the melt zone. The melt zone is a zone in the melt extruding unit may follow the feed zone starting from the inlet of the polypropylene material in the extrusion unit and may be the zone of the extrusion unit in which the polypropylene material may preferably be molten. The melt zone may thus be further away from the inlet of polypropylene material compared to the feed zone, which may be the zone of the extrusion unit which is the closest to the inlet of the polypropylene material and/or where the temperature is not sufficient to melt the polypropylene material. Alternatively, each co-agent and/or a radical initiator composition may for example be added to an extrusion unit, like an extruder, in the feed zone, preferably for example either together with or separately from the polypropylene material. The feed zone of the extrusion unit may thereby be the first zone in the extrusion unit starting from the inlet of the polypropylene material in the extrusion unit and/or in which the polypropylene material may preferably not yet be molten and/or that has the lowest temperature setting of the extrusion unit.

A co-agent may thereby for example be fed to an extrusion unit at an inlet that is different from the inlet used to feed the radical initiator composition. Preferably the co-agent is thereby fed to the extrusion unit before feeding the radical initiator composition and/or preferably at an inlet of the extrusion unit located closer to the inlet of the polypropylene material.

In the context of the present invention, extrusion is to be understood to be a method of processing of a polyolefin material by bringing the material in a molten condition, allowing the material to be mixed, preferably homogenously, and allowing further ingredients to be mixed into the polyolefin material whilst that polyolefin material is in molten condition. After extrusion, the processed polyolefin material is solidified and may for example be shaped into small granules. Such extrusion may for example be performed in an extrusion unit, especially for example in an extruder.

In an embodiment, the invention relates to a process wherein an extrusion may for example be conducted in a melt extruder at a temperature higher than the melting temperature of the polypropylene material, preferably between 100°C and 300°C, preferably between at least > 150°C and < 250°C, further preferred between at least > 160°C and < 240°C, further preferred between at least > 165°C and < 220°C.

An extrusion may thereby be for example be carried out in an extrusion unit comprising at least 2 zones, preferably least 3 zones, preferably at least 6 zones ,with individual temperature settings, whereby the temperature in the first zone may be not sufficient to melt the polypropylene material, preferably between 150°C and 170 °C, the temperature in the second zone may be sufficient to melt the polyolefin material preferably between > 170°C and <190°C. The temperature in the third zone or any further zone may be between 190°C and 220 °C, preferably between 190 °C and 250 °C, whereby the temperature of the third or any further zone may be higher or equal to the temperature of the second zone and the zones of the extrusion unit are preferably counted starting from the from the inlet of the polyolefin material in the extrusion unit. The second as well as any third and/or subsequent zone may form the melt zone. The first zone may form the feed zone.

Such extrusion may for example be performed in an extrusion unit such as an extruder. Such an extruder may for example be a single-screw extruder. Such an extruder may for example be a twin-screw extruder. Such extrusion unit may comprise multiple extruders positioned in series.

An extrusion may for example be performed for example with a screw speed of between 25 RPM and 200 RPM, especially between 50 RPM and 150 RPM.

Analytic methods

DSC analysis: Melting temperatures ($T_m$) were measured by differential scanning calorimetry (DSC) using a DSC Q100 from TA Instruments. The measurements were carried out at a heating and cooling rate of 10 °C/min from -60 °C to 200 °C. The transitions were deduced from the second heating and cooling curves.

Size exclusion chromatography (SEC):

The molecular weight and polydispersity were studied by SEC measurements performed at 160 °C on a Polymer Laboratories PLXT-20 Rapid GPC Polymer Analysis System (refractive index detector and viscosity detector) with 3 PLgel Olexis (300 $\times$ 7.5 mm, Agilent Technologies) columns in series. 1,2,4-Trichlorobenzene was used as eluent at a flow rate of 1 mL•min-1. The molecular weights were calculated with respect to polyethylene standards (Polymer Laboratories). A Polymer Laboratories PL XT-220 robotic sample handling system was used as autosampler.

The molecular weight and polydispersity were further studied by SEC measurements performed at 150 °C (for entries 7 and 8 below) on a Polymer Char GPC-IR® built around an Agilent GC oven model 7890, equipped with an autosampler and the Integrated Detector IR4 with 3 PLgel Olexis (300 $\times$ 7.5 mm, Agilent Technologies) columns in series. 1,2-dichlorobenzene (oDCB) was used as an eluent at a flow rate of 1 mL·min-1. The SEC-data were processed using Calculations Software GPC One®. The molecular weights were calculated with respect to polyethylene or polystyrene standards.

Fourier transform infrared spectroscopy (FT-IR): The content of co-agent comprising an unsaturated cyclic structure and a double bond connected in alpha-position on the unsaturated cyclic structure, such as for example maleic anhydride (MAH) was determined by FT-IR using a Varian 610-IR spectrometer equipped with an FT-IR microscope. The spectra were recorded at 30 °C in a transmission mode with a resolution of 2 cm-1. Polymer films were analyzed on a zinc selenium disk. Varian Resolution Pro software version 4.0.5.009 was used for the analysis of the spectra. Calibration was performed using samples previously analyzed by NMR spectroscopy.

EXAMPLES

In this example 35 g of polypropylene homopolymer (SABIC, MFI 9, molecular characteristics as well as Tm and Tc can be found under entry R in the table below) was added to previously prepared mixture containing 0.0175g (0.044 mmol) of Laurox S, 0.09 of antioxidant Irganox B225 (mixture of pentaerythritol tetrakis(3-(3,5-di-tert-butyl-4-hydroxyphenyl)propionate and tris(2,4-di-tert-butylphenyl) phosphite) and 1.75g (17.8 mmol, 5 w.% with respect to the amount of polyproplyne) of maleic anhydride dissolved in 20mL of acetone.

Mixture was stirred for an hour to evenly spread all additives and then left under the fumehood over the night to allow the solvent evaporate.

As a next step divinylbenzene was added and ingredients were precisely mixed. Temperature in the miniextruder was set on 190°C and screw speed at 100rpm. Extruder was feed twice with 10g of prepared samples. The process was performed for 5 minutes.

Preparation of the modified polypropylene was performed using a twin-screw co-rotating micro compounder (MC15) at Xplore (Brightland campus, Geleen) having a capacity of 15 mL. The MC15 micro compounder offers a torque of 12 Nm/screw.

Crude product was dissolved in m-xylene and precipitated in acetone. Filtrated and dried product was extracted with acetone using Soxhlet apparatus for 24 hours.

Divinylbenzene and/or styrene was added in different amounts regarding the molar ratio of maleic anhydride to divinylbenzene and/or styrene for entries 1 to 4 below.

Entries 1 & 5: molar ratio of maleic anhydride to divinylbenzene 5:3
Entries 2 & 6: molar ratio of maleic anhydride to divinylbenzene 5:5
Entry 3: molar ratio of maleic anhydride to divinylbenzene and styrene 5:1.5:1.5
Entry 4: molar ratio of maleic anhydride to divinylbenzene and styrene 5:2.5:2.5
Entry 7: molar ratio of maleic anhydride to divinylbenzene 5:3
Entry 8: molar ratio of maleic anhydride to divinylbenzene 5:0

For entries 5 and 6 the temperature in miniextruder was set to 240 °C.

Entry R corresponds to the unmodified polypropylene homopolymer.

Material properties are shown in Table 1 below.

Table 1

| Entry | MAH [wt%] | $M_n$ [kg·mol$^{-1}$] | $M_w$ [kg·mol$^{-1}$] | PDI | $T_m$ [°C] | $T_c$ [oC] |
|---|---|---|---|---|---|---|
| **1** | 1.2 | 55 | 238 | 4.3 | 164 | 129 |
| **2** | 1 | 38 | 247 | 6.6 | 165 | 129 |
| **3** | 1.5 | 46 | 219 | 4.7 | 166 | 134 |
| **4** | 1.7 | 47 | 238 | 5.0 | 166 | 130 |
| **5** | 2.1 | 36 | 201 | 5.6 | 163 | 125 |
| **6** | 1.2 | 48 | 234 | 4.9 | 165 | 127 |
| **R** | N.A. | 51 | 244 | 4.7 | 167 | 112 |
| SEC performed at 160°C in 1,2,4-trichlorobenzene | | | | | | |

Table 2

| Entry | MAH [wt%] | $M_n$ [kg·mol$^{-1}$] | $M_w$ [kg·mol$^{-1}$] | PDI | $T_m$ [oC] | $T_c$ [oC] |
|---|---|---|---|---|---|---|
| **7** | 1.2 | 42 | 266 | 6.4 | 164 | 129 |
| **8** | 0.4 | 37 | 271 | 7.3 | 165 | 129 |
| SEC performed at 150°C in 1,2-dichlorobenzene | | | | | | |

From the results above, one can see that entry 1 shows significant grafting of MAH with little degradation of the molecular weight, which indicates little β-scission.

Entry 2 indicates that MAH grafting cannot be improved by adding further divilnylbenzene but rather modification of the molecular weight, which may indicate β-scission and/or branching/cross-linking, occurs (see especially for example PDI) when too much divilnylbenzene is used.

Entry 3 indicates that MAH grafting may be improved by replacing some divinylbenzene with styrene but degradation of the molecular weight, which indicates little β-scission, increases at the same time.

Entry 4 indicates that MAH grafting may be further improved by adding more divinylbenzene and replacing some of the divilnylbenzene with styrene, whereby little degradation of the molecular weight, which indicates little β-scission, is found.

Entry 5 indicates that MAH grafting may be improved by increasing the temperature but degradation of the molecular weight, which indicates β-scission, increases at the same time.

Entry 6 indicates that MAH grafting cannot be improved by adding further divilnylbenzene and increasing the temperature but rather modification of the molecular weight, which may indicate β-scission and/or branching/cross-linking, occurs when too much divilnylbenzene is used.

Entries 7 and 8 indicate that MAH grafting can be improved by adding divilnylbenzene at the same temperature. The entries 7 and 8 further indicate that modification of the molecular weight, which may indicate β-scission and/or branching/cross-linking, may be limited by adding divilnylbenzene at the same temperature (see especially for example the lower PDI for entry 7).

## Claims

1. Process for the production of modified polypropylene materials, comprising modifying a polypropylene material using a radical initiator and at least one co-agent comprising an unsaturated cyclic structure and a double bond connected in alpha-position on the unsaturated cyclic structure and at least one second co-agent with an unsaturation.

2. Process according to claim 1 wherein the polypropylene comprise at least 50wt % of polypropylene or polypropyle copolymers, like for example copolymers of propylene and/or ethylene and/or at least one or more other α-olefin(s)with 1 to 10 carbon atoms, preferably at least 51 wt% of polypropylene or polypropylene copolymers, preferably at least 60 wt% polypropylene or polypropylene copolymers, preferably at least 70 wt% polypropylene or polypropylene copolymers, preferably at least 80 wt% polypropylene or polypropylene copolymers, preferably at least 90 wt% polypropylene or polypropylene copolymers, preferably at least 95 wt% polypropylene or polypropylene copolymers, preferably at least 99 wt% polypropylene or polypropylene copolymers.

3. Process according to claims 1 or 2 wherein the radical initiator composition comprises at least one radical initiator selected from:

   alkyl peroxides or arylperoxides or alkyl-aryl peroxides, including for example tert-butyl peroxybenzoate, dibenzoyl peroxide, dicumyl peroxide, di(tert-butylperoxyisopropyl)benzene, 2,5-dimethyl-2,5-di(tert-butylperoxy)hexane, tert-butyl cumyl peroxide, 2,5-dimethyl-2,5-di(tert-butylperoxy)hexyne, di-tert-butyl peroxide, 1,1-di(tert-butylperoxy)-3,3,5-trimethylcyclohexane, dilauroyl peroxide and/or mixtures of two or more thereof.

4. Process according to any of the claims 1 to 3 wherein the radical initiator composition comprises at least one radical initiator that has a half-life time at 99°C of between 1.0 min and 15.0 min, alternatively between 2.0 min and 10.0 min, alternatively between 4.0 min and 7.0 min.

5. Process according to any of the claims 1 to 4 wherein the radical initiator composition comprises between 0.01 w% and 1.5 w% alternatively between 0.05 w% and 1 w%, alternatively between 0.07 w% and 0.9 w%, alternatively between 0.1 w% and 0.8 w%, alternatively between 0.2 w% and 0.7 w%, alternatively between 0.3 w% and 0.6 w% by weight of radical initiator, compared to the amount of polypropylene material.

6. Process according to any one of claims 1 to 5 wherein one co-agent comprising an unsaturated cyclic structure and a double bond connected in alpha-position on the unsaturated cyclic structure may be selected from the group of styrene, divinylbenzene, divinyl-furan, divinyl-pyrole, divinyl n-alkyl pyrole, divinyl-naphthalene and their derivatives or a mixture of two or more of these compounds.

7. Process according to any one of claims 1 to 6, wherein at least one second co-agent with an unsaturation is selected from the group of maleic anhydride, styrene, vinyl acetate, 2-hydroxyethyl-maleimide, an acrylate and/or a methacrylate or a mixture of two or more of these compounds.

8. Process according to any one of claims 1 to 7, wherein at least second one co-agent with a unsaturation is added in a quantity of between0.1 wt.% and 10 wt.%, preferably between 0.5 wt.% and 8 wt.%, further preferred between 0.7 wt.% and 7 wt.%, further preferred between 0.9 wt.% and 6 wt.%, further preferred between 1 wt.% and 5.5 wt.%, further preferred between 2.5 wt.% and 5.4 wt.%, further preferred between > 3 wt.% and 5.3 wt.%, compared to the amount of polypropylene material.

9. Process according to any one of claims 1 to 8, wherein at least one co-agent with an unsaturated cyclic structure and a double bond connected in alpha-position on the unsaturated cyclic structure may be added for example so that the molar ratio between each co-agent with an unsaturated cyclic structure and a double bond connected in alpha-position on the unsaturated cyclic structure and each second co-agent(s) with an unsaturation is between 0.1:1 and 10:1, preferably between 0.2:1 and 7:1, preferably between 0.3:1 and 6:1, further preferred between 0.4:1 and 5.5:1, further preferred between 0.5:1 and 5:1, further preferred between 0.7:1 and 2:1.

10. Process according to any one of claims 1 to 9, wherein at least two co-agents with an unsaturated cyclic structure and a double bond connected in alpha-position on the unsaturated cyclic structure are used in a preferred embodiment and/or wherein at least two co-agents with an unsaturation are used.

11. Process according to any one of claims 1 to 10, wherein at least two co-agents with an unsaturated cyclic structure and a double bond connected in alpha-position on the unsaturated cyclic structure as well as one or more co-agents with an unsaturation are used.

12. Process according to any one of claims 1 to 11, wherein each co-agent is added to an extrusion unit, like an extruder, in a stage where the polypropylene material is molten or in a solid state.

13. Process according to any one of claims 1 to 12, wherein each co-agent is added to an extrusion unit together with the polypropylene material preferably for example in the lowest temperature zone of an extrusion unit.

14. Process according to any one of claims 1 to 13, wherein each co-agent and/or a radical initiator composition is added to an extrusion unit, like an extruder, preferably in the melt zone.

15. Process according to any one of claims 1 to 13, wherein an extrusion is conducted in a melt extruder at a temperature higher than the melting temperature of the polypropylene material, preferably between 100°C and 300°C, preferably between at least > 150°C and < 250°C, further preferred between at least > 160°C and < 240°C, further preferred between at least > 165°C and < 220°C.

Europäisches
Patentamt

European
Patent Office

Office européen
des brevets

## EUROPEAN SEARCH REPORT

Application Number

EP 17 20 2288

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WONG B ET AL: "Melt rheology of graft modified polypropylene", POLYMER, ELSEVIER SCIENCE PUBLISHERS B.V, GB, vol. 38, no. 11, 1 May 1997 (1997-05-01), pages 2781-2789, XP004061851, ISSN: 0032-3861, DOI: 10.1016/S0032-3861(97)85615-7 * figure 8 * | 1-9, 12-15 | INV. C08F255/02 |
| X | WO 2009/012113 A1 (DOW GLOBAL TECHNOLOGIES INC [US]; HARRIS WILLIAM [US]; WEAVER JOHN [US] 22 January 2009 (2009-01-22) * claims 49-56; examples * | 1-9, 12-15 | |
| X | GUO-HUA HU ET AL: "EXCHANGE AND FREE RADICAL GRAFTING REACTIONS IN REACTIVE EXTRUSION", MAKROMOLEKULARE CHEMIE, MACROMOLECULAR SYMPOSIA, HUTHIG UND WEPF VERLAG. BASEL, CH, vol. 75, 1 October 1993 (1993-10-01), pages 137-157, XP000400383, * figure 14 * | 1-9, 11-15 | |
| | | | TECHNICAL FIELDS SEARCHED (IPC) |
| | | | C08F |
| X | JP H07 173229 A (TONEN SEKIYUKAGAKU KK) 11 July 1995 (1995-07-11) * claims; examples * | 1-9, 12-15 | |

-/--

The present search report has been drawn up for all claims

| Place of search | Date of completion of the search | Examiner |
|---|---|---|
| Munich | 15 May 2018 | Degrendel, Magali |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AUGIER S ET AL: "Coagent assisted polypropylene radical functionalization: monomer grafting modulation and molecular weight conservation", POLYMER, ELSEVIER SCIENCE PUBLISHERS B.V, GB, vol. 47, no. 15, 12 July 2006 (2006-07-12), pages 5243-5252, XP028060738, ISSN: 0032-3861, DOI: 10.1016/J.POLYMER.2006.05.049 [retrieved on 2006-07-12] * paragraph [03.3] * | 1-15 | |

TECHNICAL FIELDS
SEARCHED (IPC)

The present search report has been drawn up for all claims

| Place of search | Date of completion of the search | Examiner |
|---|---|---|
| Munich | 15 May 2018 | Degrendel, Magali |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 2288

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2018

| Patent document cited in search report | Publication date | Patent family member(s) | Publication date |
|---|---|---|---|
| WO 2009012113 A1 | 22-01-2009 | AR 067563 A1 | 14-10-2009 |
| | | BR PI0812687 A2 | 23-12-2014 |
| | | CN 101809051 A | 18-08-2010 |
| | | EP 2170970 A1 | 07-04-2010 |
| | | EP 2495268 A1 | 05-09-2012 |
| | | ES 2506096 T3 | 13-10-2014 |
| | | ES 2543180 T3 | 17-08-2015 |
| | | JP 5697978 B2 | 08-04-2015 |
| | | JP 6110830 B2 | 05-04-2017 |
| | | JP 2010533773 A | 28-10-2010 |
| | | JP 2015042755 A | 05-03-2015 |
| | | KR 20100063004 A | 10-06-2010 |
| | | RU 2010105230 A | 27-08-2011 |
| | | TW 200916489 A | 16-04-2009 |
| | | US 2010168343 A1 | 01-07-2010 |
| | | WO 2009012113 A1 | 22-01-2009 |
| JP H07173229 A | 11-07-1995 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1994025498 A